# EUROPÄISCHE PATENTANMELDUNG

(11) **EP 1 219 883 A2**
(43) Veröffentlichungstag der Anmeldung: **03.07.2002**
(21) Anmeldenummer: 01129326.3
(22) Anmeldetag: 14.12.2001
(51) Int. Cl.: F16L 33/22, F16L 33/00, F16L 37/084

(54) **Verbindungsanordnung**

(30) Priorität: 27.12.2000 DE 10065225
(71) Anmelder: FRÄNKISCHE ROHRWERKE, GEBR. KIRCHNER GmbH & Co KG, D-97486 Königsberg (DE)
(72) Erfinder: Müller, Carsten, 36115 Hilders (DE)
(74) Vertreter: Schwabe - Sandmair - Marx

(57) **Zusammenfassung**

Die Erfindung betrifft eine Verbindungsanordnung für Rohre mit einer Stützhülse, die ein Anschlag- und ein Aufschiebeende sowie eine umfängliche Dichteinrichtung 22 aufweist, und mit einer Verbindungshülse 14, wobei zwischen die Stützhülse 12 und die Verbindungshülse 14, die die Stützhülse im Wesentlichen koaxial umgibt, ein Rohrende eingeschoben wird, wobei erfindungsgemäß auf der Stützhülse über der Dichteinrichtung ein Schutzabschnitt 20 vorgesehen ist, der die Dichtflächen der Dichteinrichtung 22 während des Aufschiebens eines Rohres schützt.

## Beschreibung

Die Erfindung betrifft eine Verbindungsanordnung für Rohre, insbesondere für den Sanitär- und Heizungsbereich, bevorzugt auch für die Trinkwasserinstallation, mit einer Stützhülse, die ein Anschlag- und ein Aufschiebeende aufweist, wobei die Stützhülse darüber hinaus eine umfängliche Dichteinrichtung umfasst. Diese Anordnung gemäß dem Oberbegriff des Patentanspruchs 1 ist ferner mit einer Verbindungshülse versehen, wobei zwischen der Stützhülse und der Verbindungshülse, die die Stützhülse im wesentlichen koaxial umgibt, ein Rohrende zu liegen kommt.

Im Stand der Technik sind Verbindungsanordnungen der gattungsgemäßen Art hinlänglich bekannt. Weist die Verbindungshülse beispielsweise die Ausgestaltung eines Steckfittings auf, wird in den ringförmigen Hohlraum zwischen der Verbindungshülse bzw. der Steckhülse um die Stützhülse ein Rohrende eingeführt. Das Rohrende stößt beim Vorgang des Einführens mit seiner Stirnseite gegen die vorhandene Dichteinrichtung, insbesondere ein O-Ring, rutscht über den O-Ring hinüber und wird weiter in den Ringraum zwischen der Steckhülse und der Stützhülse eingeführt, bis die Stirnseite des Rohres gegen den Anschlag am Ende der Stützhülse stößt.

Hierbei wird allerdings der O-Ring durch das stirnseitige Ende des Rohres, beispielsweise ein Metallverbundrohr, ein Kunststoffrohr oder -schlauch oder dgl., häufig an seiner Dichtfläche verletzt, so dass die Dichteigenschaften zumindest stark beeinträchtigt oder sogar vollkommen zerstört sein können. Es kommt sogar öfters vor, dass der O-Ring aus seiner Nut wenigstens teilweise entfernt und dabei vollkommen zerquetscht wird. Selbst wenn das Ende des Rohres sorgfältig entgratet wird, treten die genannten Probleme nach wie vor häufig auf. Da derartige Undichtigkeiten meist nicht sofort erkennbar sind, sondern erst nach einigen Monaten oder gar Jahren der Betriebszeit und diese Undichtigkeiten in der Regel auch wegen der schwierigen Montagesituation an bestimmten Stellen auftreten, machen derartige Undichtigkeiten ganz enorme Probleme. Zusätzlich stellt das Entgraten einen Arbeitsgang dar.

Entsprechende Probleme treten auch bei Pressverbindungen auf, wo nach dem Einführen des Rohrendes in den Ringraum zwischen der Stützhülse und einer Presshülse ebenfalls ein O-Ring oder mehrere O-Ringe in Mitleidenschaft gezogen werden können.

Es ist dementsprechend die Aufgabe gemäß der vorliegenden Erfindung, den Nachteilen des Standes der Technik Abhilfe zu schaffen. Insbesondere soll eine Verbindungsanordnung geschaffen werden, die die Dichtung während des Verbindungsvorganges, d.h. während des Einschiebens des Rohrendes schont.

Diese Aufgabe wird durch eine Verbindungsanordnung gemäß dem Patentanspruch 1 gelöst.

Zweckmäßige Ausführungsformen des erfmdungsgemäßen Gegenstandes werden durch die Unteransprüche definiert.

Die gemäß der Erfindung erzielbaren Vorteile beruhen darauf, dass auf der Stützhülse über der Dichteinrichtung, insbesondere ein O-Ring, ein Schutzabschnitt vorgesehen ist, der die Dichtflächen der Dichteinrichtung beim Einführen eines Rohres zwischen die Stütz- und die Verbindungshülse schützt, wobei der Schutzabschnitt vom Rohrende mitgenommen wird, um die Dichtflächen in Anlage zur Rohrinnenwand zu bringen. Mit anderen Worten, das Rohrende, sei es entgratet oder nicht, rutscht auf den Schutzabschnitt, wobei das Rohrende bzw. das stirnseitige Rohrende über die Dichtung geführt wird, ohne diese selbst körperlich zu berühren. Anschließend nimmt das stirnseitige Rohrende den Schutzabschnitt mit, so dass dieser über den O-Ring rutscht und schließlich zusammen mit dem Rohrende gegen den Anschlag der Verbindungsanordnung zu liegen kommt, wobei dann die Rohrinnenwandung, die glatt ist und die O-Ringdichtung bzw. die Dichteinrichtung nicht beeinträchtigt, gegen die Rohrinnenwandung in einer optimalen Lage und mit optimaler Dichtfunktion zu liegen kommt.

Vorteilhafterweise umfasst der Schutzabschnitt einen zylindrischen und/oder rohrförmigen Bereich, an dessen Ende in Aufschubrichtung des Rohres eine radiale nach außen weisende Mitnahmeerstreckung vorgesehen ist. Die Mitnahmeerstreckung wird von dem stirnseitigen Ende des einzuschiebenden Rohres während des Montagevorganges erfasst. Dadurch wird der Schutzabschnitt beim Einschieben des Rohrendes von diesem mitgenommen, wobei einerseits das stirnseitige Rohrende von der Dichteinrichtung ferngehalten wird und andererseits das stirnseitige Ende des Rohres den Schutzabschnitt mitnimmt, so dass letztendlich die Rohrinnenwand gegen die Dichteinrichtung zur Anlage kommt.

Dabei kann die Mitnahmeerstreckung natürlich über den gesamten Umfang des Schutzabschnittes erstreckt sein. Andererseits reicht bereits ein relativ kleiner Abschnitt oder zwei Abschnitte, die am Umfang des Schutzabschnittes gegenüberliegen, um den gewünschten Mitnahmeeffekt zu erzielen.

Natürlich kann die Dichteinrichtung, die in der Regel in der Form eines O-Ringes vorgesehen wird, auch durch die Dichtwirkung weitere Dichteinrichtungen, d.h. weitere O-Ringe unterstützt werden. Diese weiteren O-Ringe können den jeweiligen O-Ring nuten auf der Stützhülse angeordnet werden. Für diesen Fall ist der Schutzabschnitt so auszugestalten, dass wenigstens einer der O-Ringe während des Aufschiebevorganges geschützt wird. natürlich können auch mehrere der O-Ringe geschützt werden, wobei diese dann vorteilhafterweise doch nahe dem Aufschiebeende der Stützhülse in ihren Nuten vorgesehen sein müssten, damit der Schutzabschnitt einerseits lange genug sein kann, um sämtliche O-Ringe abzudecken und andererseits immer noch kurz genug ist, um beim Zurückschieben während des Aufschiebevorganges für das Rohr noch vollends von sämtlichen O-Ringen entfernt werden zu können.

Vorteilhafterweise ist der Schutzabschnitt mit einem Einfädelungsbereich versehen, der den Schutzabschnitt in seiner seine Funktion erfüllenden Positionierung hält. D.h., der Schutzabschnitt weist beispielsweise sich radial nach innen verjüngende Abschnitte auf, mit denen er auf der Stützhülse aufsitzt bzw. mit der Stützhülse verkeilt, so dass beim Aufschieben eines Rohrendes diese Bereiche einerseits das Aufschieben bzw. Einfädeln des Schlauches bzw. Rohres auf den Schutzabschnitt erleichtern und andererseits den Schutzabschnitt so lange in seiner Position verharrt und nicht vom Rohrende mitgenommen wird, bis das Rohrende mit der radial nach außen weisenden Mitnahmeerstreckung kollidiert, um dann die Haltekraft des Einfädelungsbereiches zu überwinden und den Schutzabschnitt mitzunehmen.

Damit der Einfädelungsbereich nicht dazu in der Lage ist, die Dichtflächen der Dichteinrichtung, insbesondere eines O-Ringes, bei dem Vorgang des Einführens des Rohrendes bzw. des Wegschiebens des Schutzabschnittes zu verletzen, ist der Einfädelungsbereich mit Schwächungsstellen versehen. Diese Schwächungsstellen sind dazu in der Lage, bei einer radial nach außen gerichteten Belastung des Einfädelungsbereiches bzw. des Schutzabschnittes, d.h., insbesondere wenn der Einfädelungsbereich über die Dichteinrichtung rutscht, die formbedingten Spannungen des Einfädelungsbereiches auch während dieser über die Dichtung gleitet so weit zu reduzieren, dass sich der Einfädelungsbereich leicht aufweiten lässt, um ohne große Belastung über den O-Ring bzw. die Dichteinrichtung geschoben werden zu können. Zwar ist die Ausführungsform mit den Schwächungsstellen, beispielsweise axial erstreckten Schlitzen, Lamellen, sich überlappende Lamellen im Einfädelungsbereich oder dgl. noch vorteilhafter, jedoch bedeutet bereits ein Schutzabschnitt mit einem Einfädelungsbereich ohne Schwächungsstellen eine wesentliche Verbesserung des Standes der Technik, da die definierte und vorbestimmte Form des Einfädelungsbereiches keine Belastungen auf die Dichteinrichtung einwirken lässt, die in ihrer Schwere mit den Belastungen eines stirnseitigen Rohrendes auch nur entfernt vergleichbar wären.

Vorteilhafterweise umfasst die Verbindungshülse eine Lagekontrolle, über die die Lage des Schutzabschnittes und des Rohrendes nach dem Aufschiebevorgang überprüfbar sind, wenigstens sollte die Lage des Schutzabschnittes nach dem Aufschiebevorgang überprüft werden. Hierzu kann in der Verbindungshülse ein durchsichtiger Abschnitt, eine Öffnung oder dgl. angeordnet sein. Auch ist es möglich, am Anschlagende selbst eine Sichtöffnung vorzusehen, die beispielsweise durch den anschlagenden Schutzabschnitt, etwa dessen Mitnahmeerstreckung, verschlossen werden kann, sobald dieser an dem Anschlag der Verbindungsanordnung angelangt ist. Natürlich ist es auch möglich, wie an sich bekannt, einen durchsichtigen Kunststoffring am Anschlag zu verrasten oder anzuspritzen, insofern Kunststoffringe aus durchsichtigem Kunststoff gewünscht sind, wobei dieses Kunststoffteil dann dazu dienen kann, die Verbindungshülse unverlierbar an der Restverbindungsanordnung zu halten. Dieser Kunststoff- oder Anbindungsring kann auch eine Öffnung bzw. lediglich einen durchsichtigen Abschnitt aufweisen, um eine Lagekontrolle für den Schutzabschnitt und/oder ein Rohrende zu bilden.

Die Verbindungshülse kann vorteilhafterweise als Steckhülse etwa mit einem hakenartigen Element ausgebildet sein, so dass ein Rohrende, das in den Zwischenraum zwischen die Stützhülse und die Steckhülse eingeführt wird, zwar an dem in Aufschubrichtung entspannten hakenartigen Element vorbeigleiten kann, wenn jedoch eine Zugkraft auf das Rohrende ausgeübt wird, greift das hakenartige Element in das Rohrmaterial ein und das Rohrende wird auf diese Weise an der Verbindungsanordnung festgehalten.

Andererseits kann auch eine Verbindungshülse in Form einer Presshülse vorgesehen sein. Diese wird dann mittels einer Presszange plastisch verformt, um das Rohrende nach dem Einschieben und damit nach dem Wegschieben des Schutzabschnittes festzulegen.

Der Schutzabschnitt kann natürlich aus Metall oder auch aus Kunststoff hergestellt sein. Für die Festlegung von Metallverbundrohren kann der Schutzabschnitt so ausgebildet sein, dass er sogleich als galvanische Trennung dient, um beispielsweise eine Aluminiumschicht eines Metallverbundrohres von einer Messing- oder Kupferstützhülse bzw. deren Anschlag zu trennen.

Nachfolgend wird die vorliegende Erfindung unter Bezugnahme auf die Ausführungsformen gemäß den beigefügten Darstellungen näher erläutert. Dabei werden weitere Merkmale, Vorzüge und Zielsetzungen gemäß der Erfindung offenbart, wobei in den Darstellungen
- Fig. 1: eine erste Ausführungsform mit Merkmalen gemäß der Erfindung in einer axialen Schnittdarstellung wiedergibt;
- Fig. 2: eine weitere Ausführungsform in einer axialen Schnittdarstellung zeigt; und
- Fig. 3: eine weitere bevorzugte Ausführungsform mit Merkmalen gemäß der Erfindung in einer axialen Schnittdarstellung wiedergibt.

In den Figuren sind gleiche oder zumindest funktionsgleiche Abschnitte mit gleichen Bezugszeichen versehen, so dass sich eine mehrfache Besprechung bzw. Beschreibung in der Regel erübrigen lässt.

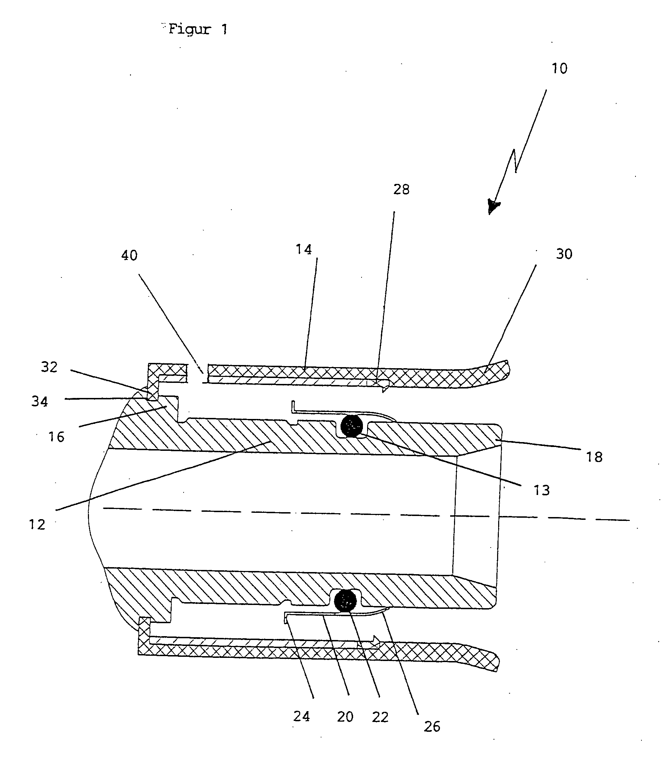

Die Fig. 1 lässt eine Verbindungsanordnung 10 mit Merkmalen gemäß der Erfindung erkennen, die für Rohre, insbesondere für den Sanitär- und Heizungsinstallationsbereich repräsentiert. Entsprechend können mit dieser Verbindungsanordnung Trinkwasserleitungsinstallationen, Heizungsleitungsinstallationen für Zentralheizungen oder dgl. realisiert werden.

Die Verbindungsanordnung 10 umfasst eine Stützhülse 12, auf die ein Rohrende eines festzulegenden Rohres aufgeschoben wird. Am stirnseitigen Ende der Stützhülse 12 ist ein Aufschubbereich 18 vorgesehen, der leicht abgerundet ist, um eine leichtere Einfädelung des stirnseitigen Rohrendes zu ermöglichen. Am anderen Ende, d.h. am Ende in Aufschubrichtung des Rohres, ist an der Stützhülse 12 ein Anschlag 16 vorgesehen, der die Aufschubweite des Rohrendes begrenzt.

Die Stützhülse 12 wird durch eine Verbindungshülse und hier insbesondere eine Steckhülse 14 umgeben. Anstelle einer Steckhülse kann natürlich auch eine Presshülse oder eine Hülse gemäß einer Verschraubungstechnologie eingesetzt werden.

Die Steckhülse 14 weist an ihrem stirnseitigen Ende eine Erweiterung 30 auf, die dazu dient, die Zentrierung des stirnseitigen Rohrendes des Rohres, das aufzuschieben ist, besser in den ringförmigen Hohlraum zwischen der Steckhülse und der Stützhülse 12 einzuführen.

Ein Hakenelement 28 dient dazu, sich mit der Außenwand des eingeführten Rohrendes zu verhaken um das Rohr fest in der Verbindungsanordnung zu halten. Das hakenartige Element 28 ist in üblicher Weise ausgebildet, d.h., seine in den Ringraum zwischen die Stützhülse 12 und die Steckhülse 14 hineinragende Erstreckung ist in Aufschubrichtung des Rohrendes so ausgebildet, dass es lediglich einen geringen Widerstand entgegensetzt, während es entgegengesetzt zu der Aufschubrichtung in Eingriff mit dem Mantelmaterial des Rohrendes tritt, mit diesem verhakt und das Rohr fest und sicher in seiner Endposition hält.

Die Steckhülse 14 wird in einer Rille 34 jenseits des Anschlages 16 der Stützhülse 12 über eine radial einwärts ragende Erstreckung 32 gehalten. Diese Art der Vormontage soll die Montage auf der Baustelle erleichtern. Im Bereich des Anschlages ist in der Steckhülse 14 eine Öffnung 40 vorgesehen, über die bei der Montage die Endlage des Rohrendes und eines Schutzabschnittes 20 überprüft werden kann, der nachfolgend noch im Einzelnen erörtert wird.

In einer Nut 13 in der Stützhülse 12 ist eine Dichtung 22, hier ein O-Ring, angeordnet. Wird ein Rohrende eines festzulegenden Rohres in den Ringraum zwischen der Stützhülse 12 und der Steckhülse 14 eingeschoben, kann die Stirnseite den O-Ring verletzen und seine Dichtfunktion über kurz oder lang beeinträchtigen, so dass ein Flüssigkeitsaustritt geschieht.

Um eine Verletzung der Dichteinrichtung 22 bzw. des O-Ringes 22 vermeiden zu können, ist erfindungsgemäß der Schutzabschnitt 20 vorgesehen, der die Dichteinrichtung 22 vor dem stirnseitigen Rohrende schützt. Wird das Rohrende eingeführt, geleitet es zunächst mit seiner Stirnseite über den Schutzabschnitt, bis die glatte Rohrwandung über der Dichtfläche der Dichteinrichtung 22 angelangt ist. Anschließend kann das stirnseitige Rohrende den Schutzabschnitt 20 über eine Mitnahmeerstreckung 24 mitnehmen, wobei der Schutzabschnitt über die Dichteinrichtung 22 gleitet und die Dichteinrichtung letztendlich freigibt, so dass die Innenwandung des Rohres in Anlage zu der Dichteinrichtung 22 kommt.

Um das Aufschieben des Rohrendes auf den Schutzabschnitt 20 zu erleichtern, kann der Schutzabschnitt 20 mit einem Einfädelungsbereich 26 versehen sein. Auf diese Weise kann das stirnseitige Rohrende nicht zu früh in einen verhakenden Eingriff mit dem Schutzabschnitt 20 treten, um in unbeabsichtigter Weise den Schutzabschnitt 20 vor sich her zu schieben, so dass letztendlich doch wieder das stirnseitige Ende des scharfkantigen Rohrendes auf die Dichtflächen der Dichteinrichtung 22 trifft, um diese zu verletzen.

Der Einfädelungsbereich 26 kann noch mit Schwächungsstellen versehen sein, die sich in Axialrichtung erstrecken, so dass es keines großen Kraftaufwandes bedarf, einerseits den Einfädelungsbereich radial nach außen zu weiten, wenn dieser über die Dichteinrichtung 22 rutscht, und andererseits keine übermäßig großen Aufschubkräfte aufgebracht werden müssen, um das Rohrende zusammen mit dem Schutzabschnitt über die Mitnahmeerstreckung 24 bis zu dem Anschlag 16 der Stützhülse 12 aufzuschieben.

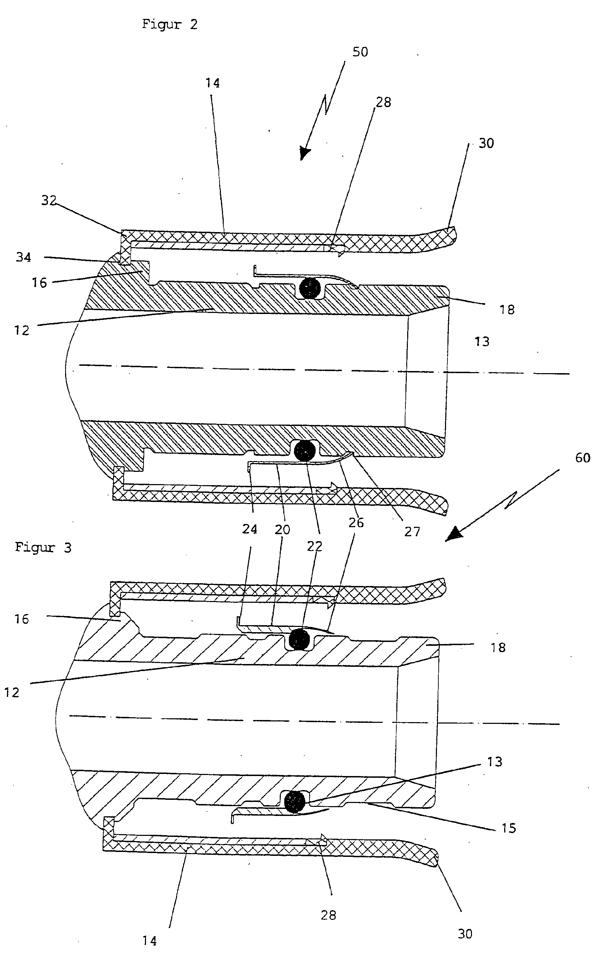

Zu den Ausführungsformen gemäß den Fig. 2 und 3 sei zunächst darauf hingewiesen, dass natürlich auch diese mit einer Kontrollöffnung 40 versehen sein können, auch wenn diese hier nicht explizit dargestellt ist. Gegenüber der Ausführungsform nach der Fig. 1 ist bei der Ausführungsform nach Fig. 2 in der Stützhülse 12 zusätzlich eine Eingriffsrille 27 vorgesehen, in die der Einfädelungsbereich 26 des Schutzabschnittes 20 hineinragt, um dem stirnseitigen Rohrende des festzulegenden Rohres keine Möglichkeit einzuräumen, mit dem Einfädelungsbereich unbeabsichtigt zu verhaken um diesen zu früh von der Dichteeinrichtung 22 zu schieben. Die Ausführungsform 50 gemäß Fig. 2 ist ansonsten analog zu der Ausführungsform gemäß Fig. 1 ausgebildet. Die Ausführungsform 60 gemäß Fig. 3 ist ebenfalls prinzipiell ausgebildet, wie die Ausführungsform 10 gemäß Fig. 1. Lediglich der Kurzabschnitt 20 ist mit einem spitzer zulaufenden lippenartigen Einfädelungsbereich 26 ausgestattet.

Der Anschlag 16 ist ebenfalls etwas anders ausgebildet als bei den Ausführungsformen gemäß Fig. 1 und 2, und zwar derart, dass das Rohrende lediglich radial innen gegen den Anschlag gegenkommt, was ebenfalls als galvanische Trennung dienen kann, da eine in einem Metallverbundrohr vorhandene Metallschicht auf diese Weise keinen mechanischen und damit galvanischen Kontakt zu dem Anschlag 16 erhalten kann. Auch über eine zusätzlich vor der Dichtung 22 vorgesehene Nut 15 in Verbindung mit der lippenartigen Ausbildung des Einfädelungsbereiches 26 kann das Rohrende gesteuert werden, um eine verfrühte Mitnahme des Schutzabschnittes 20 verhindern zu können.

## Patentansprüche

1. Verbindungsanordnung (10, 50, 50) für Rohre, insbesondere für Sanitär- und Heizungsinstallation, mit einer Stützhülse (12), die ein Anschlag- und ein Aufschiebeende (16, 18) sowie eine umfängliche Dichteinrichtung (22) aufweist, und mit einer Verbindungshülse (14), wobei zwischen der Stützhülse (12) und der Verbindungshülse (14), die die Stützhülse im Wesentlichen koaxial umgibt, ein Rohrende zu liegen kommt,
**dadurch gekennzeichnet, dass** auf der Stützhülse (12) über der Dichteinrichtung (22) ein Schutzabschnitt (20) vorgesehen ist, der die Dichtflächen der Dichteinrichtung beim Einführen eines Rohres zwischen die Stütz- und die Verbindungshülse schützt, wobei der Schutzabschnitt (20) vom Rohrende mitgenommen wird, um die Dichtflächen in Anlage zur Rohrinnenwand zu bringen.

2. Verbindungsanordnung nach Anspruch 1, **dadurch gekennzeichnet, dass** der Schutzabschnitt einen zylindrischen und/oder rohrförmigen Bereich aufweist, an dessen Ende in Aufschubrichtung des Rohres eine radial nach außen weisende Mitnahmeerstreckung (24) vorgesehen ist, die das Rohrende beim Aufschieben hintergreift, so dass der Schutzabschnitt (20) vom Rohrende beim Aufschieben mitgenommen wird.

3. Verbindungsanordnung nach Anspruch 2, **dadurch gekennzeichnet, dass** die Mitnahmeerstreckung (24) abschnittweise oder vollumfänglich vorgesehen ist.

4. Verbindungsanordnung nach einem der Ansprüche 1 bis 3, **dadurch gekennzeichnet, dass** die Dichteinrichtung (22) ein O-Ring ist.

5. Verbindungsanordnung nach einem der Ansprüche 1 bis 4, **dadurch gekennzeichnet, dass** mehrere Dichteinrichtungen (22) vorgesehen sind, von denen wenigstens eine, bevorzugt mehrere oder alle durch den Schutzabschnitt, der eine entsprechende Länge in Axialrichtung aufweist, vor dem Aufschieben eines Rohres geschützt sind.

6. Verbindungsanordnung nach einem der Ansprüche 1 bis 5, **dadurch gekennzeichnet, dass** der Schutzabschnitt (20) einen Einfädelungsbereich (26) aufweist, der den Schutzabschnitt in seiner Bereitschaftsstellung hält.

7. Verbindungsanordnung nach Anspruch 6, **dadurch gekennzeichnet, dass** der Einfädelungsbereich (26) Schwächungsstellen aufweist, etwa axial erstreckte Schlitze, Lamellen oder dgl., so dass sich der Einfädelungsbereich leicht aufweiten lässt.

8. Verbindungsanordnung nach einem der Ansprüche 1 bis 7, **dadurch gekennzeichnet, dass** die Verbindungshülse eine Lagekontrolle (40) aufweist, über die die Lage des Schutzabschnittes (20) und/oder des Rohrendes nach dem Aufschiebevorgang überprüfbar ist bzw. sind.

9. Verbindungsanordnung nach Anspruch 8, **dadurch gekennzeichnet, dass** die Lagekontrolle ein durchsichtiger Abschnitt bzw. Öffnung am Anschlagende, eine Öffnung oder dgl. in der Verbindungshülse oder dgl. ist.

10. Verbindungsanordnung nach einem der Ansprüche 1 oder 9, **dadurch gekennzeichnet, dass** die Lagekontrolle (40) eine Öffnung am Anschlag bzw. ein zusätzlicher Abschnitt, etwa in der Form eines verrastbaren Ringes ist, der aus durchsichtigem Material ist oder wenigstens eine Sichtöffnung aufweist.

11. Verbindungsanordnung nach einem der Ansprüche 1 bis 10, **dadurch gekennzeichnet, dass** die Verbindungshülse (14) eine Steckhülse mit einem Hakenelement (28) ist.

12. Verbindungsanordnung nach einem der Ansprüche 1 bis 10, **dadurch gekennzeichnet, dass** die Verbindungshülse eine Presshülse ist, die plastisch verformbar ist.
